(19) Europäisches Patentamt
European Patent Office
Office européen des brevets

(11) **EP 2 246 937 B1**

(12) **EUROPEAN PATENT SPECIFICATION**

(45) Date of publication and mention
of the grant of the patent:
**12.08.2015 Bulletin 2015/33**

(21) Application number: **09704251.9**

(22) Date of filing: **15.01.2009**

(51) Int Cl.:
*H01Q 3/26* (2006.01)    *H04B 7/04* (2006.01)
*H04B 7/06* (2006.01)    *H04W 52/42* (2009.01)
*H04B 7/10* (2006.01)

(86) International application number:
**PCT/CN2009/000054**

(87) International publication number:
**WO 2009/092289 (30.07.2009 Gazette 2009/31)**

(54) **BEAM SHAPING METHOD AND DEVICE**

STRAHLFORMUNGSVERFAHREN UND EINRICHTUNG

PROCÉDÉ ET DISPOSITIF DE MISE EN FORME DE FAISCEAU

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **15.01.2008 CN 200810056225**

(43) Date of publication of application:
**03.11.2010 Bulletin 2010/44**

(73) Proprietor: **China Academy of
Telecommunications Technology
Haidian District
Beijing 100191 (CN)**

(72) Inventors:
- **CAI, Yuemin
  Beijing 100083 (CN)**
- **REN, Shiyan
  Beijing 100083 (CN)**
- **SUN, Changguo
  Beijing 100083 (CN)**
- **KANG, Shaoli
  Beijing 100083 (CN)**
- **WU, Kewei
  Beijing 100083 (CN)**
- **XU, Hongyan
  Beijing 100083 (CN)**

(74) Representative: **Isarpatent
Patentanwälte Behnisch Barth Charles
Hassa Peckmann & Partner mbB
Postfach 44 01 51
80750 München (DE)**

(56) References cited:
CN-A- 1 855 770          CN-A- 1 925 362
CN-A- 101 047 399        US-A1- 2005 128 983
US-A1- 2006 234 751

- LARS THIELE ET AL: "Capacity Scaling of Multi-User MIMO with Limited Feedback in a Multi-Cell Environment", CONFERENCE RECORD OF THE FORTY-FIRST ASILOMAR CONFERENCE ON SIGNALS, SYSTEMS & COMPUTERS, 2007 : NOVEMBER 4 - 7, 2007, PACIFIC GROVE, CALIFORNIA / ED. BY MICHAEL B. MATTHEWS. IN COOPERATION WITH THE NAVAL POSTGRADUATE SCHOOL, MONTEREY, CALIFORNIA, PI, 4 November 2007 (2007-11-04), pages 93-100, XP031242064, ISBN: 978-1-4244-2109-1
- KHALIGHI M A ET AL: "CAPACITY OF WIRELESS COMMUNICATIONS SYSTEMS EMPLOYING ANTENNA ARRAYS, A TUTORIAL STUDY", WIRELESS PERSONAL COMMUNICATIONS, SPRINGER, DORDRECHT, NL, vol. 23, no. 3, 1 December 2002 (2002-12-01), pages 321-352, XP001133096, ISSN: 0929-6212, DOI: 10.1023/A: 1021211513679

**Description**

**Field of the Invention**

The present invention relates to the field of communications and particularly to a beam forming method and device.

**Background of the Invention**

As mobile communication technologies develop, an array of antennas has been applied in numerous systems for an improved capacity of the systems. Accompanying this, however, and along with the development of the society, people pay increasing attention to surroundings and their own health while enjoying the convenience resulting from mobile communications, and also the electromagnetic environment has gradually become a sensitive issue on which people focus. In order to attain a sufficient gain, typically 6 to 8 antennas are required to be arranged at an interval into a traditional array of antennas. The traditional array of antennas is much larger in size than an existing single antenna, and from the perspective of engineering, the traditional array of antennas also brings more demanding to its construction due to its large windward area.

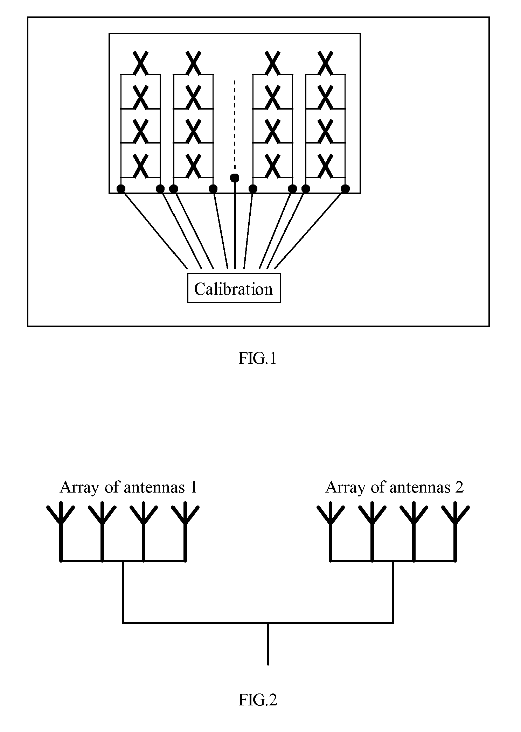

In order to overcome the foregoing drawbacks, it will be a trend of future development to adopt an array of dual polarized antennas. The use of dual polarized antennas may halve an array of antennas in width and thus lower the difficulty of engineering. The array of dual polarized antennas as referred to here is as illustrated in FIG. 1, where array elements in two polarized directions are cross-arranged to thereby reduce the windward area of the array of antennas without reducing the number of antenna elements.

Moreover, it is possible in a subsequent evolved system to adopt an antenna system with arrays spaced at a distance from each other to thereby form a multi-array system. With the multi-array system, the arrays of antennas are very independent of each other to thereby offer possible smooth transition to a future Multiple-Input Multiple-output (MIMO) system. FIG. 2 illustrates a schematic diagram of a multi-array antenna system with two arrays of antennas, where the arrays of antennas may be arrays of single-polarized antennas or multi-polarized antennas.

Along with this, however, there is also a new problem occurring with the adoption of the system with arrays of antennas. For example, the adoption of dual-polarized antennas in the system results in a reduced number of arrays of antennas in each polarized direction and consequentially a widen beam of the arrays of antennas, which challenges the use of beam forming of the arrays of antennas.

Existing beam forming generally includes beam forming under a maximum power based criterion and beam forming under a maximum carrier to interference ratio based criterion, and weight coefficients derived in an algorithm of the former maximize the reception power at a receiver side. However, a global or local optimal solution may be derived dependent upon the varying specific implementation algorithm. For example, in the case of an smart antenna with $N$ antenna elements, if a vector of a received multi-antenna signal is represented as x, where, $\mathbf{x} = [x_1, x_2, \cdots, x_N]$, and a vector of weight coefficients for beam forming is represented as w, where, $\mathbf{w} = [w_1, w_2, \cdots, w_N]$, then the received signal after beam forming may be represented as y, where,

$$y = \mathbf{w}^T \mathbf{x} = \sum_{n=1}^{N} w_n x_n \qquad (1)$$

The power of the received signal after beam forming may be represented as p, where,

$$p = |y|^2 = y^* y = \mathbf{w}^H \mathbf{x}^* \mathbf{x}^T \mathbf{w} = \mathbf{w}^H \mathbf{R}_{xx} \mathbf{w} \qquad (2)$$

Where $(\cdot)^*$ represents conjugation of a complex (or a complex vector), $(\cdot)^H$ represents conjugated transposition of a vector (or a matrix), and $(\cdot)^T$ represents transposition of a vector (or a matrix). An object of the maximum power based criterion is to search for a vector of weights w to maximize the solution of equation (2).

$$\mathbf{w}_{opt1} = \arg \max_{\mathbf{w}} \left( \frac{\mathbf{w}^H \mathbf{R}_{xx} \mathbf{w}}{\mathbf{w}^H \mathbf{w}} \right) \qquad (3)$$

In equation (3), $w_{opt1}$ is a value of w maximizing $\dfrac{\mathbf{w}^H \mathbf{R}_{xx}\mathbf{w}}{\mathbf{w}^H\mathbf{w}}$. As can be apparent from related knowledge of a matrix, a solution of the w maximizing the solution of equation (2) is unique and equal to an eigenvector corresponding to the maximum eigenvalue of the matrix method in which a global optimum solution can be derived.

A simplified beam forming method is to search a preset set of weight vectors for a weight vector maximizing the solution of equation (2). For example, in a method taking array response vectors spaced at angles as the preset set of weight vectors, a space to be scanned is divided at angles of $\Phi$, where, $\Phi = \{\varphi_1, \varphi_2, \cdots, \varphi_L\}$, and an array response vector in each direction is for example represented as $\mathbf{a}(\varphi_l)$, $l = 1, \cdots, L$ (an array response vector refers to relative amplitude and phase magnitudes of an electromagnetic signal from one of the directions over an array of antennas as well known to those skilled in the art). Then after beam forming with the array response vectors, the power of the received signal may be represented as $p_l$, where,

$$p_l = \mathbf{a}(\varphi_l)^H \mathbf{R}_{xx}\mathbf{a}(\varphi_l) \qquad (4)$$

Then an angle maximizing the solution of equation (4) may be obtained as $w_{opt2}$, where,

$$\mathbf{w}_{opt2} = \mathbf{a}\left(\varphi_{max}\right)\Bigg|_{\varphi_{max} = \underset{\varphi \in \Phi}{\arg\max}\{p_1, p_2, \cdots, p_L\}} \qquad (5)$$

Equations (3) and (5) represent two general methods for smart antenna beam forming, referred to respectively as Eigenvalue Based Beamforming (hereinafter referred to as an EBB algorithm) and Grid of Beamforming (hereinafter referred to as an GOB algorithm).

All of the existing beam forming methods are applicable only to a single array of antennas with a small spacing. In the case of an antenna system with antenna arrays which tend to be very independent of each other, phase relationships between the arrays are not determined depending on an incident angle, therefore the existing grid of beamforming algorithm is inapplicable, and the eigenvalue based beamforming is also problematic. For example, in the case of a high speed, temporal correlation of a channel may be weaken due to fast fading of the channel, and in the implementation, a time delay is necessarily present with the beam forming, thus resulting in consequent asymmetry between uplink and downlink channels and implementation, there is an upper limit of antenna transmission power, and when the arrays of antennas are very independent of each other, signals received over the arrays tend to be considerably unbalanced, thus resulting in greatly unbalanced allocation of power for downlink transmission, so that a part of the antennas reach the maximum transmission power while the transmission power of the remaining antennas is likely still low, thus resulting in limited power and a loss of beam forming.

As can be apparent from the foregoing analysis, the traditional beam forming methods fail to significantly optimize the performance of a multi-array system due to the independency between arrays in the system.

US 2005/0128983 A1 discloses a method grouping multiple transmission antennas by a base station in a mobile communication system which includes the multiple transmission antennas and multiple reception antennas, which further discloses: when a transmitter has Nt number of transmission antennas and a receiver has Nr number of reception antennas, Nt is larger than Nr in a forward link environment, the transmission antennas are classified into Nr number of groups using channel covariance so as to maximize the communication capacity of the transmitter; the channel covariance matrix is a channel value estimated by the receiver; and after the maximum eigenvalues of the sub-matrixes 'Rii' are respectively calculated, the transmission antennas are grouped so that a sum of the calculated maximum eigenvalues may be determined.

US 2006/0234751 A1 and XP001133066 disclose both the water-filling method, in which lower power loading is assigned for better channels with higher eigenvalues.

## Summary of the Invention

In order to address the problem that the traditional beam forming methods fail to optimize the performance of a multi-array system due to arrays in the system being independent of each other, embodiments of the invention provide a beam forming method and a device applicable to a multi-array antenna system.

Embodiments of the invention provide a beam forming method applicable to a multi-array antenna system, as defined in claims 1 to 6.

Also embodiments of the invention further provide a beam forming device applicable to a multi-array antenna system, as defined in claims 7 and 8.

FIG. 1 is a schematic diagram of an array of dual-polarized antennas in the prior art;
FIG. 2 is a schematic diagram of a multi-array antenna system with two arrays of antennas in the prior art;
FIG. 3 is a flow chart of a method according to an example;
FIG. 4 is a schematic diagram of joint beam forming according to the example;
FIG. 5 is a flow chart of a method according to a first embodiment of the invention;
FIG. 6 is a structural diagram of a device according to a second embodiment of the invention;
FIG. 7 is a structural diagram of a device according to the first embodiment of the invention; and
FIG. 8 is a structural diagram of a device according to a third embodiment of the invention.

**Detailed Description of the Embodiments**

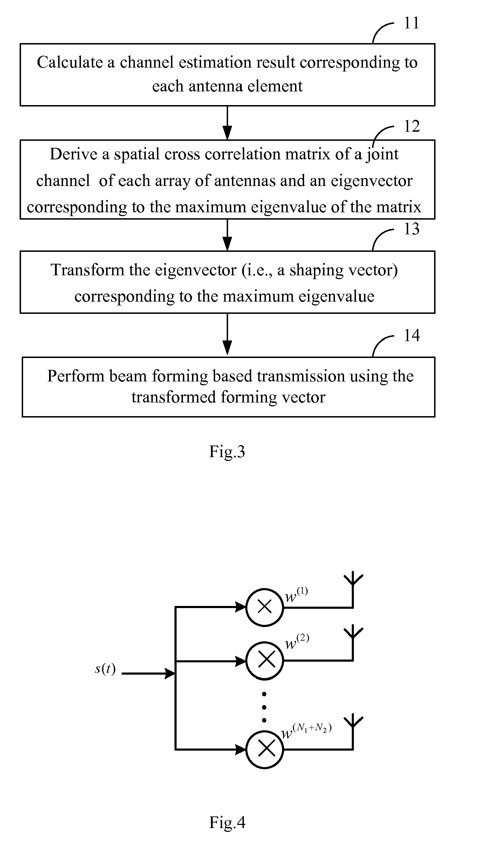

A first example, which provides a beam forming method, is based upon the traditional eigenvalue based beamforming algorithm and eliminates the unbalanced transmission power of antennas (an array of antennas) due to asymmetry of uplink and downlink channels and a beam forming gain loss due to limited power in the application of the traditional eigenvalue based beamforming algorithm to a multi-array antenna system. The specific operations 11 to 14 of the first example are as illustrated in FIG. 3.

Operation 11: a channel estimation result $h_{ka}^{n}$ of each antenna element in a multi-array antenna system is calculated, where, $ka = 1...K_a^n$, $n = 1...N$.

For example, a channel impulse response applying to a signal received over each antenna from a transmitter side to a receiver side is represented as $h_{ka}^{n}$, where,

$$\mathbf{h}_{ka}^{n} = [h_{(ka,n)}^{1}, h_{(ka,n)}^{2}, ..., h_{(ka,n)}^{W}], ka = 1...K_a^n, n = 1...N \tag{6}$$

the total number of antenna elements in the $n^{th}$ array, and W represents the length of a channel estimation window allocated to a user;

Operation 12: a spatial cross correlation matrix R of a joint channel of all arrays of antenna is derived from $\mathbf{h}_{ka}^{n}$, and an eigenvector $\mathbf{w}_{ebb}$ corresponding to the maximum eigenvalue of R is derived as a forming vector.

Channel estimates of all antennas are arranged into $N$ channel matrixes, with channel estimation results of all of the antennas in each array of antennas being arranged into a channel matrix $H_n$, where,

$$\mathbf{H}_{n} = [\mathbf{h}_{1}^{T}, \mathbf{h}_{2}^{T}, ...\mathbf{h}_{K_a^n}^{T}]^{T}, n = 1...N \tag{7}$$

A joint channel matrix H is derived from channel matrixes of all arrays of antennas (i.e., all of the $H_n$, each of which is derived from channel estimation results of all of the antennas in each array of antennas), where,

$$\mathbf{H} = [\mathbf{H}_{1}^{T}, \mathbf{H}_{2}^{T}, ...\mathbf{H}_{N}^{T}]^{T} \tag{8}$$

A spatial cross correlation matrix R of a joint channel of all arrays of antennas is obtained from H derived from equation (8) as

$$\mathbf{R} = \mathbf{H}\mathbf{H}^{H} \tag{9}$$

Here, R is derived from $\mathbf{h}_{ka}^{n}$ with equations (7), (8) and (9) for the purpose of illustrating a solution of the present example, and alternatively the spatial cross correlation matrix R of the joint channel of all arrays of antennas can be derived from $\mathbf{h}_{ka}^{n}$ in other methods, which are well known to those skilled in the art and detailed description of which is omitted here.

Subsequently an eigenvector $\mathbf{w}_{ebb}$ corresponding to the maximum eigenvalue of the spatial cross correlation matrix R of the joint channel of all arrays of antennas is derived as the forming vector, where,

$$\mathbf{w}_{ebb} = [\mathbf{w}_1^\mathbf{T}, \mathbf{w}_2^\mathbf{T}, ... \mathbf{w}_\mathbf{N}^\mathbf{T}]^\mathbf{T} \tag{10}$$

Operation 13: the eigenvector (i.e., the forming vector) $\mathbf{w}_{ebb}$ is transformed.

Here $\mathbf{w}_{ebb}$ is transformed mainly because arrays are independent of each other. Due to the independency of the arrays, transmission power is unbalanced among the arrays as a result of beam forming based transmission based on $\mathbf{w}_{ebb}$, for example, some of the arrays have high transmission power while the remaining arrays have low transmission power. Meanwhile, due to the inconsistence between uplink and downlink channels, when beam forming is performed for the downlink by using the ratio of power received over the uplink, the allocation of power is suboptimum, and power limitation may also arise when some of the antenna elements reach the maximum transmission power. $\mathbf{w}_{ebb}$ may be transformed in two ways typically.

$\mathbf{w}_{ebb}$ may be transformed per array. The transformation per array refers to transformation of each antenna array as a whole. $\mathbf{w}_n$, which represents a forming vector corresponding to the $n^{th}$ array, may be derived from $\mathbf{w}_{ebb}$ in the following transformation equation, where $\mathbf{w}_n, n = 1...N$:

$$\hat{\mathbf{w}}_n = \alpha_n \mathbf{w}_n, n = 1...N \tag{11}$$

where $\alpha_n$ represents a transformation coefficient of the array, and $\hat{\mathbf{w}}_n$ represents the transformed forming vector.

Here $\mathbf{w}_n$ is transformed with its amplitude changed while its phase relationship remaining unchanged. Further, the ratio of transmission power of each antenna is maintained within the same array. For example, transmission power of 6 watts is allocated to four antenna elements in the same untransformed array and the ratio of their transmission power is 2:2:1:1 (that is, 2 watts for two of the antennas respectively and 1 watt for the remaining two antennas respectively). Although transmission power of 9 watts may be allocated to the four antenna elements in the transformed array, the ratio of their transmission power is still 2:2:1:1 (that is, 3 watts for two of the antennas respectively and 1.5 watt for the remaining two antennas respectively). The transformation coefficient may derived as:

$$\alpha_n = \sqrt{\frac{\mathbf{w}_n^\mathbf{H} \mathbf{w}_n}{\sum\limits_{n=1}^{N} \mathbf{w}_n^\mathbf{H} \mathbf{w}_n}}, n = 1...N$$

Moreover, when the power allocated to an antenna element in an array according to $\mathbf{w}_n$ exceeds the maximum transmission power of the antenna element, it is possible to limit the transmission power of the antenna element to its maximum transmission power by the transformation while reallocating the power allocated according to $\mathbf{w}_n$ minus the transmission power of the antenna element to an antenna element of other array. Here, $\mathbf{w}_n$ is also transformed with its amplitude changed while its phase relationship remaining unchanged. The reallocation may be performed in a maximum ratio principle, for example, if the power allocated to an antenna element in an array according to $\mathbf{w}_n$ exceeds the transmission power of the antenna element by 1 watt, and an antenna element of other array is allocated with power less than its maximum transmission power by 0.8 watts, then power of 0.8 watts from the power of 1 watt is reallocated to the antenna element of the other array, and the remaining power of 0.2 watts is reallocated alike. Alternatively, the reallocation may be performed in an equal ratio principle, for example, if the power allocated to an antenna element in an array according to $\mathbf{w}_n$ exceeds the transmission power of the antenna element by 1 watt, and there are four antenna elements in total in other array, then power of 0.25 watts from the power of 1 watt is reallocated to each of the four antenna elements respectively while ensuring that the transmission power of each of the four antenna elements does not exceed the maximum transmission power thereof.

$\mathbf{w}_{ebb}$ may be transformed per antenna. The transformation per antenna refers to separate transformation of each antenna element. A forming vector $w_n^{(k_a)}$ of each antenna element is derived from $\mathbf{w}_{ebb}$, where $k_a = 1...K_a^n, n = 1...N$, and $K_a^n$ represents the total number of antenna elements in the $n^{th}$ array, and a forming vector $\hat{\mathbf{w}}_n^{(k_a)}$ may be obtained by

$$\hat{\mathbf{w}}_n{}^{(k_a)} = \beta_n^{(k_a)} w_n^{(k_a)}, k_a = 1...K_a^n, n = 1...N \tag{12}$$

where $\beta_n$ represents an array transformation coefficient.

Here $\mathbf{w}_n$ is transformed with its amplitude changed while its phase relationship remaining unchanged. The transformation coefficient may be derived as

$$\beta_n^{(k_a)} = \sqrt{\frac{\left| w_n^{(k_a)} \right|^2}{\sum\limits_{n=1}^{N} \mathbf{w}_n^{\mathbf{H}} \mathbf{w}_n}}, k_a = 1...K_a^n, n = 1...N \tag{13}$$

Moreover, when the power allocated to an antenna element in an array according to $\mathbf{w}_n$ exceeds the maximum transmission power of the antenna element, it is possible to limit the transmission power of the antenna element to its maximum transmission power by the transformation while reallocating the power allocated according to $\mathbf{w}_n$ minus the transmission power of the antenna element to an antenna element of other array. Here, $\mathbf{w}_n$ is also transformed with its amplitude changed while its phase relationship remaining unchanged. The reallocation may be performed in a maximum or equal ratio principle while ensuring that the transmission power of each antenna element does not exceed the maximum transmission power thereof.

Operation 14: beam forming based transmission is performed using the forming vector $\hat{\mathbf{w}}_n$ or $\hat{\mathbf{w}}_n{}^{(k_a)}$ obtained from the transformation as illustrated in FIG. 4.

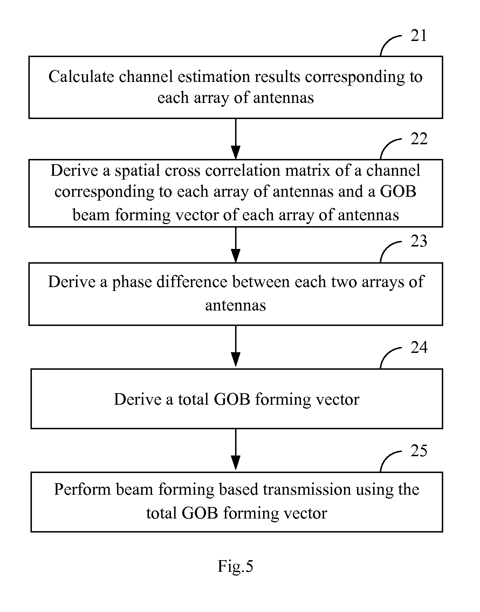

A first embodiment of the invention relates to a beam forming method and is based upon the grid of beamforming method in the prior art. For a system in a multi-array structure, the traditional grid of beamforming method is not applicable if arrays are of a little correlation to each other, because a phase relationship between the arrays is not fixed for a specific incident angle. That is, no array response vector can be constructed jointly for a plurality of arrays, but the grid of beamforming algorithm can still be adopted in each array to derive its corresponding forming vector, and here a phase relationship between each two arrays is calculated in a method plurality of arrays. As illustrated in FIG. 5, the implementation operations 21-25 are as follows.

Operation 21: a channel estimation result corresponding to each array of antennas is calculated as in the operation 11 in the first example.

Operation 22: a spatial cross correlation matrix of a channel corresponding to all arrays of antennas is derived from the channel estimation results of all of the arrays of antennas, and a beam forming vector $\mathbf{w}_{gob}^n$ is derived for each array of antennas in the GOB algorithm, where, $n = 1...N$.

The spatial cross correlation matrix of the channel of all of the arrays of antennas may be represented as $R_n$, where,

$$\mathbf{R}_n = \mathbf{H}_n \mathbf{H}_n^{\mathbf{H}}, n = 1...N \tag{14}$$

Then the power of a signal received through beam forming by an array response vector $\mathbf{a}^n(\varphi_l)$ of each array of antennas may be represented as $p_l^n$, where,

$$p_l^n = \mathbf{a}^n(\varphi_l)^H \mathbf{R}_n \mathbf{a}^n(\varphi_l), n = 1...N \tag{15}$$

Then an angle maximizing the solution of equation (15) is obtained for each antenna as:

$$\mathbf{w}_{gob}^n = \mathbf{a}^n\left(\varphi_{max}\right)\bigg|_{\varphi_{max} = \arg\max\limits_{\varphi \in \Phi}\left\{ p_1^n, p_2^n, \cdots, p_L^n \right\}} \tag{16}$$

Thus a forming vector $W_{gob}^n$ of each array of antennas may be derived in the GOB algorithm, where, $n = 1... N$.

Operation 23: a phase difference between each two arrays of antennas is derived from $\mathbf{w}_{gob}^{n}$.

Particularly, a spatial cross correlation matrix of a joint channel of all arrays of antennas is derived. An eigenvector corresponding to the maximum eigenvalue of the spatial cross correlation matrix is derived. In analogy to the solution in the example, the derived forming vector is represented as $\mathbf{w}_{ebb}$, where,

Subsequently, a phase difference between each two arrays of antennas is represented as $\Delta\varphi^{n}$, where,

$$\Delta\varphi^{n} = \arg(\mathbf{w}_{gob}^{n\mathrm{H}}\mathbf{w}_{\mathrm{n}}^{\mathrm{T}}), n = 1...N \tag{18}$$

Here $\arg(\cdot)$ represents an operation of deriving a complex phase angle.

Operation 24: a total GOB forming vector $\mathbf{w}_{gob}$ is derived from the forming coefficients $\mathbf{w}_{gob}^{n}$ corresponding to the respective arrays of antennas and $\Delta\varphi^{n}$, where, $n = 1...N$, and

$$\mathbf{w}_{gob} = [\mathbf{w}_{gob}^{1}e^{j\cdot2\pi\cdot\Delta\varphi^{1}}, \mathbf{w}_{gob}^{2}e^{j\cdot2\pi\cdot\Delta\varphi^{2}}, ...\mathbf{w}_{gob}^{N}e^{j\cdot2\pi\cdot\Delta\varphi^{N}}] \tag{19}$$

Operation 25: beam forming based transmission is performed by using the total GOB forming vector $\mathbf{w}_{gob}$ as illustrated in FIG. 4.

A further embodiment of the invention relates to a beam forming method in which it is possible to switch between the foregoing two solutions adaptively in practice. For example, after the forming vector $\mathbf{w}_{ebb}$ for beam forming in the EBB algorithm (See equation (17)) and the forming vector $\mathbf{w}_{gob}$ (See equation (19)) are derived respectively in the foregoing two solutions, the power of a signal received at a terminal using either of the above two beam forming methods $p_{gob}$ and $p_{ebb}$ can further be calculated from the spatial cross correlation matrix R (See equation (9)) of the joint channel of all arrays of antennas, where,

$$p_{gob} = \left|\mathbf{w}_{gob}^{\mathrm{H}}\mathbf{R}\mathbf{w}_{gob}\right| \tag{20}$$

$$p_{ebb} = \left|\mathbf{w}_{ebb}^{\mathrm{H}}\mathbf{R}\mathbf{w}_{ebb}\right| \tag{21}$$

Then determination is made so that $\mathbf{w}_{ebb}$ is selected as the forming vector if $p_{gob} < p_{ebb}$, otherwise $\mathbf{w}_{gob}$ is selected as the forming vector.

Moreover, the beam forming algorithms according to the invention have been practice, joint beam forming of plural of arrays and separate beam forming of each array with a diversity transmission algorithm can be switched in view of a specific channel environment.

It shall be noted that symmetry between uplink and downlink channels of the system is assumed for joint beam forming, which necessitates elimination of inconsistency between the uplink and downlink channels due to a radio frequency channel, that is, assuming real time calibration has been implemented between the arrays of antennas to thereby eliminate inconsistency between the uplink and the downlink of the radio frequency channels.

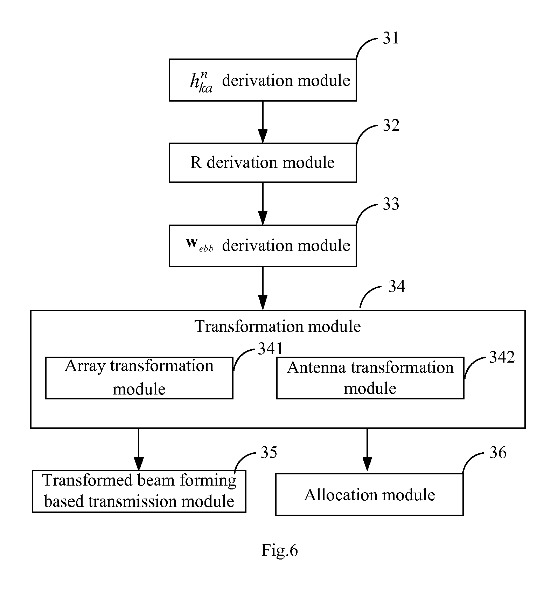

A second embodiment of the invention relates to a beam forming device applicable to a multi-array antenna system, which is structured as illustrated in FIG. 6 and includes:

an $\mathbf{h}_{ka}^{n}$ derivation module 31 configured to derive a channel estimation result $\mathbf{h}_{ka}^{n}$ of each antenna in the multi-array antenna system, where, $ka = 1...K_{a}^{n}, n = 1...N$, $N$ represents the total number of arrays and is more than one, and $K_{a}^{n}$ represents the total number of antenna elements in the $n^{\mathrm{th}}$ array;

an R derivation module 32 configured to derive a spatial cross correlation matrix R of a joint channel of all arrays of antennas from $\mathbf{h}_{ka}^{n}$ derived by the $\mathbf{h}_{ka}^{n}$ derivation module 31;

a $\mathbf{w}_{ebb}$ derivation module 33 configured to derive an eigenvector $\mathbf{w}_{ebb}$ corresponding to the maximum eigenvalue of R derived by the R derivation module 32;

a transformation module 34 configured to transform $\mathbf{w}_{ebb}$ derived by the $\mathbf{w}_{ebb}$ derivation module 33 by changing only its amplitude; and

a transformed beam forming based transmission module 35 configured to perform beam forming based transmission using $\mathbf{w}_{ebb}$ transformed by the transformation module 34 as a forming vector.

The transformation module 34 further includes:

an array transformation module 341 configured to transform $\mathbf{w}_{ebb}$ per array by changing only its amplitude.

an antenna transformation module 342 configured to transform $\mathbf{w}_{ebb}$ per antenna by changing only its amplitude.

The device further includes:

an allocation module 36 configured to, when the power allocated according to the forming vector of $\mathbf{w}_{ebb}$ transformed by the transformation module 34 exceeds the maximum transmission power of an antenna element, enable transmission at the maximum transmission power of the antenna element while reallocating the power allocated according to the forming vector minus the maximum transmission power of the antenna element to an antenna element of other array.

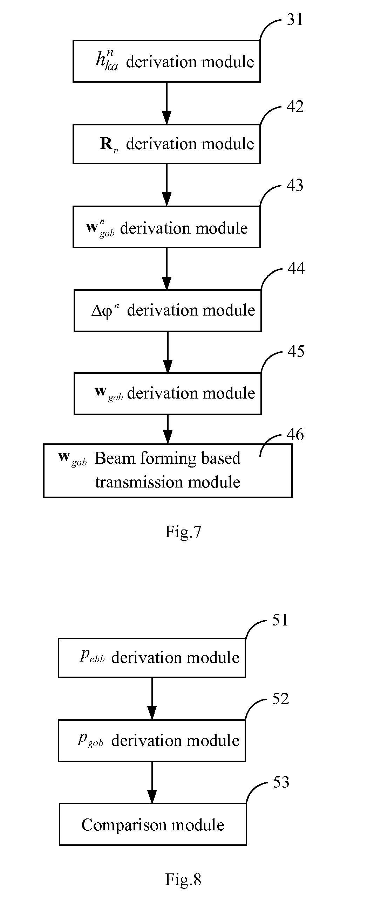

A further embodiment of the invention relates to a beam forming device, related to the method described in the first embodiment, applicable to a multi-array antenna system, which is structured as illustrated in FIG. 7 and includes:

an $\mathbf{h}_{ka}^{n}$ derivation module 31 configured to derive a channel estimation result $\mathbf{h}_{ka}^{n}$ of each antenna in the multi-array antenna system, where, $ka = 1 ... K_a^n, n = 1 ... N$ , N represents the total number of arrays and is more than one, and $K_a^n$ represents the total number of antenna elements in the $n^{\text{th}}$ array;

an $\mathbf{R}_n$ derivation module 42 configured to derive a spatial cross correlation matrix $\mathbf{R}_n$ of a channel corresponding to each array of antennas from $\mathbf{h}_{ka}^{n}$ derived by the $\mathbf{h}_{ka}^{n}$ derivation module 31;

a $\mathbf{w}_{gob}^{n}$ derivation module 43 configured to derive a forming vector $\mathbf{w}_{gob}^{n}$ of each array of antennas from $\mathbf{R}_n$ derived by the $\mathbf{R}_n$ derivation module 32 in a GOB algorithm, where, n=1...N;

a $\Delta\varphi^n$ derivation module 44 configured to derive a phase difference $\Delta\varphi^n$ between each two arrays of antennas from $\mathbf{w}_{gob}^{n}$ derived by the $\mathbf{w}_{gob}^{n}$ derivation module 43 and $\mathbf{w}_n$ in claim 3, where, $\Delta\varphi^n = \arg(\mathbf{w}_{gob}^{n\mathrm{H}}\mathbf{w}_{\mathrm{n}}^{\mathrm{T}})$, $n = 1 ... N$;

of all arrays of antennas from $\mathbf{w}_{gob}^{n}$ derived by the $\mathbf{w}_{gob}^{n}$ derivation module 43 and $\Delta\varphi^n$ derived by the $\Delta\varphi^n$ derivation module 44 as $\mathbf{W}_{gob} = [\mathbf{w}_{gob}^{1}e^{j\cdot2\pi\cdot\Delta\varphi^{1}}, \mathbf{w}_{gob}^{2}e^{j\cdot2\pi\cdot\Delta\varphi^{2}}, ... \mathbf{w}_{gob}^{N}e^{j\cdot2\pi\cdot\Delta\varphi^{N}}]$, and

a $\mathbf{w}_{gob}$ beam forming based transmission module 46 configured to perform beam forming based transmission using $\mathbf{w}_{gob}$ derived by the $\mathbf{w}_{gob}$ derivation module 45.

A third embodiment of the invention relates to a beam forming device applicable to a multi-array antenna system, which is structured as illustrated in FIG. 8 and includes:

a $p_{ebb}$ derivation module 51 configured to derive $p_{ebb}$ from $\mathbf{w}_{ebb}$ and R as described above as $p_{ebb} = \left|\mathbf{w}_{ebb}^{\mathrm{H}}\mathbf{R}\mathbf{w}_{ebb}\right|$, where $p_{ebb}$ represents power of a signal received at a terminal and formed using a forming vector of transformed $\mathbf{w}_{ebb}$;

a $p_{gob}$ derivation module 52 configured to derive $p_{gob}$ from R and $\mathbf{w}_{gob}^{n}$ as described above as $p_{gob} = \left|\mathbf{w}_{gob}^{\mathrm{H}}\mathbf{R}\mathbf{w}_{gob}\right|$, where $p_{gob}$ represents power of a signal received at the terminal and formed using $\mathbf{w}_{gob}$; and

a comparison module 53 configured to select the transformed $\mathbf{w}_{ebb}$ as the forming vector if $p_{gob}$ derived by the $p_{gob}$ derivation module 52 is below $p_{ebb}$ derived by the $p_{ebb}$ derivation module 51, otherwise select $\mathbf{w}_{gob}$ as the forming vector.

**Claims**

1. A beam forming method applicable to a multi-array antenna system, comprising:

deriving (21) an estimation of the channel impulse response $\mathbf{h}_{ka}^n$ as seen by each antenna element in the multi-array antenna system, wherein $ka = 1...K_a^n, n = 1...N$, $N$ represents the total number of arrays and is more than one, and $K_a^n$ represents the total number of antenna elements in the $n^{th}$ array,

wherein $\mathbf{h}_{ka}^n$ are arranged into $N$ channel matrixes $\mathbf{H}_n$, where $\mathbf{H}_n = [\mathbf{h}_1^T, \mathbf{h}_2^T, ...\mathbf{h}_{K_a^n}^T]^T$ and wherein a joint channel matrix H is defined as $\mathbf{H} = [\mathbf{H}_1^T, \mathbf{H}_2^T, ...\mathbf{H}_N^T]^T$, wherein $(\cdot)^T$ represents transposition of a vector or matrix;

deriving (22) a spatial cross correlation matrix $\mathbf{R}_n$ of a channel corresponding to each array of antennas from $\mathbf{h}_{ka}^n$, where $\mathbf{R}_n = \mathbf{H}_n\mathbf{H}_n^H$, wherein $(\cdot)^H$ represents conjugated transposition of a vector or matrix;

deriving (22) antenna array weight vectors $\mathbf{w}_{gob}^n$, $n = 1...N$ of each array of antennas from $\mathbf{R}_n$ in a GOB algorithm, said GOB algorithm being implemented with steps of:

defining a predefined set of array response vectors $\mathbf{a}^n(\varphi_l)$, which cover certain scanning angles $\varphi_l$, $l = 1 ... L$, $L$ representing the total number of scanning angles,
computing the power $p_l^n$ of the received signal for every array response vector $\mathbf{a}^n(\varphi_l)$, where

$$p_l^n = \mathbf{a}^n(\varphi_l)^H \mathbf{R}_n \mathbf{a}^n(\varphi_l), n = 1... N, l = 1... L,$$

and choosing as antenna array weight vector $\mathbf{w}_{gob}^n$ the array response vector $\mathbf{a}^n(\varphi_{max})$, where $\varphi_{max}$ is the

$\varphi_l$ that maximizes, for a constant $n$, the power $p_l^n$, providing the maximum power for beam forming;;

deriving (12) a spatial cross correlation matrix $\mathbf{R}$ of a joint channel of all of the arrays of antennas from $\mathbf{h}_{ka}^n$ as $\mathbf{R} = \mathbf{H}\mathbf{H}^H$;
deriving (12) an eigenvector $\mathbf{w}_{ebb}$ corresponding to the maximum eigenvalue of $\mathbf{R}$, where $\mathbf{w}_{ebb} = [\mathbf{w}_1^T, \mathbf{w}_2^T, ...\mathbf{w}_N^T]^T$ each of the $N$ subarrays $\mathbf{w}_n$ of $\mathbf{w}_{ebb}$ being the array weight vector of the $n^{th}$ array of antennas;
deriving (23) a phase difference $\Delta\varphi^n$ between each two arrays of antennas from $\mathbf{w}_{gob}^n$ and $\mathbf{w}_n$ as

$$\Delta\varphi^n = \arg(\mathbf{w}_{gob}^{nH}\mathbf{w}_n^T), n = 1...N;$$

deriving (24) a total GOB antenna array weight vector $\mathbf{w}_{gob}$ of all arrays of antennas from $\mathbf{w}_{gob}^n$ and

$\Delta\varphi^n$ as $\mathbf{w}_{gob} = [\mathbf{w}_{gob}^1 e^{j\cdot 2\pi\cdot\Delta\varphi^1}, \mathbf{w}_{gob}^2 e^{j\cdot 2\pi\cdot\Delta\varphi^2}, ...\mathbf{w}_{gob}^N e^{j\cdot 2\pi\cdot\Delta\varphi^N}]$; and
performing (25) beam forming based transmission using $\mathbf{w}_{gob}$.

2. The method of claim 1, further comprising:

transforming (13) $w_{ebb}$ per array or per antenna by changing only its amplitude;
deriving $p_{ebb}$ from the transformed $w_{ebb}$ and R as $p_{ebb} = \left|\mathbf{w}_{ebb}^H \mathbf{R}\mathbf{w}_{ebb}\right|$, wherein, $p_{ebb}$ represents power of a signal received at a terminal and formed using an antenna array weight vector of transformed $\mathbf{w}_{ebb}$;
deriving $p_{gob}$ from $\mathbf{R}$ and $\mathbf{w}_{gob}^n$ as $p_{gob} = \left|\mathbf{w}_{gob}^H \mathbf{R}\mathbf{w}_{gob}\right|$, wherein, $p_{gob}$ represents the power of a signal received at the terminal and formed using $\mathbf{w}_{gob}$; and
if $p_{gob} < p_{ebb}$, selecting transformed $\mathbf{w}_{ebb}$ as the antenna array weight vector; otherwise, selecting $\mathbf{w}_{gob}$ as the antenna array weight vector.

3. The method of claim 2, wherein, transforming $\mathbf{w}_{ebb}$ per array by changing only its amplitude comprises:

deriving antenna array weight vectors $\mathbf{w}_n$ of the arrays of antennas from $\mathbf{w}_{ebb}$, and transforming $\mathbf{w}_n$ in amplitude

into the antenna array weight vectors $\hat{\mathbf{w}}_n$ as $\hat{\mathbf{w}}_n = \alpha_n \mathbf{w}_n$, $n = 1...N$, wherein, $\alpha_n = \sqrt{\dfrac{\mathbf{w}_n^{\mathbf{H}}\mathbf{w}_n}{\sum\limits_{n=1}^{N}\mathbf{w}_n^{\mathbf{H}}\mathbf{w}_n}}, n = 1...N$ .

4. The method of claim 2, wherein, transforming $\mathbf{w}_{ebb}$ per antenna by changing only its amplitude comprises:

deriving an antenna array weight vector $w_n^{(k_a)}$ of each antenna element from $\mathbf{w}_{ebb}$, wherein, $k_a = 1...K_a^n$, $n$ = $1...N$, and $K_a^n$ represents the total number of antenna elements in the $n^{\text{th}}$ array, and transforming $w_n^{(k_a)}$ in amplitude into the antenna array weight vector $\hat{\mathbf{w}}_n^{(k_a)}$ as $\hat{\mathbf{w}}_n^{(k_a)} = \beta_n^{(k_a)} w_n^{(k_a)}, k_a = 1...K_a^n, n = 1...N$, where-

in, $\beta_n^{(k_a)} = \sqrt{\dfrac{\left| w_n^{(k_a)} \right|^2}{\sum\limits_{n=1}^{N}\mathbf{w}_n^{\mathbf{H}}\mathbf{w}_n}}, k_a = 1...K_a^n, n = 1...N$ .

5. The method of claim 2, wherein, when power allocated to an antenna element according to the antenna array weight vector of transformed $\mathbf{w}_{ebb}$ exceeds the maximum transmission power of the antenna element, the antenna element transmits at its maximum transmission power and the power allocated minus the maximum transmission power of the antenna element is reallocated to an antenna element of other array while ensuring that transmission power of each antenna element does not exceed the maximum transmission power thereof.

6. The method of claim 5, wherein, the reallocation is performed under a maximum or equal ratio principle.

7. A beam forming device applicable to a multi-array antenna system, comprising:

an $\mathbf{h}_{ka}^n$ derivation module (31) configured to derive an estimation of the channel impulse response $\mathbf{h}_{ka}^n$ as seen by each antenna element in the multi-array antenna system, wherein, $ka = 1...K_a^n, n = 1...N$ , $N$ represents the total number of arrays and is more than one, and $K_a^n$ represents the total number of antenna elements in the $n^{\text{th}}$ array;

an $\mathbf{R}_n$ derivation module (42) configured to derive from $\mathbf{h}_{ka}^n$ delivered by the $\mathbf{h}_{ka}^n$ derivation module (31) $N$ channel matrixes $\mathbf{H}_n = [\mathbf{h}_1^{\mathbf{T}}, \mathbf{h}_2^{\mathbf{T}}, ...\mathbf{h}_{K_a^n}^{\mathbf{T}}]^{\mathbf{T}}, n = 1...N$ , and to derive a spatial cross correlation matrix $\mathbf{R}_n$ of a channel corresponding to each array of antennas as $\mathbf{R}_n = \mathbf{H}_n \mathbf{H}_n^{\mathbf{H}}$ , wherein $(\cdot)^T$ represents transposition and $(\cdot)^H$ represents conjugated transposition of a vector or matrix;

a $\mathbf{w}_{gob}^n$ derivation module (43) configured to implement a GOB algorithm, wherein said GOB algorithm is configured to define a predefined set of array response vectors $a^n(\varphi_l)$, which cover certain scanning angles $\varphi_l$, $l = 1... L$, $L$ representing the total number of scanning angles, to compute the power $p_l^n$ of the received signal for every array response vector $a^n(\varphi_l)$, where $p_l^n = \mathbf{a}^n(\varphi_l)^{\mathbf{H}} \mathbf{R}_n \mathbf{a}^n(\varphi_l)$, $n = 1...N, l = 1...L$, $\mathbf{R}_n$ being the one derived by the $\mathbf{R}_n$ derivation module (42),

and to choose as antenna array vector $\mathbf{w}_{gob}^n$ the array response vector $\mathbf{a}^n(\varphi_{max})$, where $\varphi_{max}$ is the $\varphi_l$ that maximizes, for a constant $n$, the power $p_l^n$ , providing the maximum power for beam forming;

an $\mathbf{R}$ derivation module (32) configured to derive from $\mathbf{h}_{ka}^n$ delivered from the $\mathbf{h}_{ka}^n$ derivation module (31) a joint channel matrix **H** as $\mathbf{H} = [\mathbf{H}_1^T, \mathbf{H}_2^T, ... \mathbf{H}_N^T]^T$ , wherein $\mathbf{H}_n = [\mathbf{h}_1^T, \mathbf{h}_2^T, ... \mathbf{h}_{K_a^n}^T]^T$, and to obtain a spatial cross correlation matrix **R** of a joint channel of all arrays of antennas as $\mathbf{R}_n = \mathbf{H}_n \mathbf{H}_n^{\mathbf{H}};$

an $w_{ebb}$ derivation module (33) configured to derive an eigenvector $\mathbf{w}_{ebb}$ corresponding to the maximum eigenvalue of **R**, derived by the **R** derivation module (32), where $\mathbf{w}_{ebb} = [\mathbf{w}_1^T, \mathbf{w}_2^T, ... \mathbf{w}_N^T]^T$, each of the $N$ subarrays $\mathbf{w}_n$ of $\mathbf{w}_{ebb}$ being the array weight vector of the $n^{th}$ array of antennas;

a $\Delta\varphi^n$ derivation module (44) configured to derive a phase difference $\Delta\varphi^n$ between each two arrays of antennas from $\mathbf{w}_{gob}^n$ derived by the $\mathbf{w}_{gob}^n$ derivation module (43) and $\mathbf{w}_n$ derived by the $\mathbf{w}_{ebb}$ derivation module (33), where $\Delta\varphi^n = \arg(\mathbf{w}_{gob}^{n\mathbf{H}} \mathbf{w}_n^T)$, $n = 1...N$;

a $\mathbf{w}_{gob}$ derivation module (45) configured to derive a total GOB antenna array weight vector $\mathbf{w}_{gob}$ of all of the arrays of antennas from $\mathbf{w}_{gob}^n$ derived by the $\mathbf{w}_{gob}^n$ derivation module (43) and $\Delta\varphi^n$ derived by the $\Delta\varphi^n$ derivation module (44) as $\mathbf{w}_{gob} = [\mathbf{w}_{gob}^1 e^{j \cdot 2\pi \cdot \Delta\varphi^1}, \mathbf{w}_{gob}^2 e^{j \cdot 2\pi \cdot \Delta\varphi^2}, ... \mathbf{w}_{gob}^N e^{j \cdot 2\pi \cdot \Delta\varphi^N}]$; and

a $\mathbf{w}_{gob}$ beam forming based transmission module (46) configured to perform beam forming based transmission using $\mathbf{w}_{gob}$ transformed by the $\mathbf{w}_{gob}$ derivation module (45).

8. The device of claim 7, further comprising a transformation module (34) configured to transform $\mathbf{w}_{ebb}$ per array (341) or per antenna (342) by changing only its amplitude, and the device further comprises:

a $p_{ebb}$ derivation module (51) configured to derive $p_{ebb}$ from the transformed $w_{ebb}$ derived by the transformation module (34) and **R** as $p_{ebb} = |\mathbf{w}_{ebb}^{\mathbf{H}} \mathbf{R} \mathbf{w}_{ebb}|$, wherein, $p_{ebb}$ represents the power of a signal received at a terminal and formed using an antenna array weight vector of transformed $\mathbf{w}_{ebb}$;

a $p_{gob}$ derivation module (52) configured to derive $p_{gob}$ from **R** and $\mathbf{w}_{gob}^n$ as $p_{gob} = |\mathbf{w}_{gob}^{\mathbf{H}} \mathbf{R} \mathbf{w}_{gob}|$, wherein, $p_{gob}$ represents the power of a signal received at the terminal and formed using $\mathbf{w}_{gob}$; and

a comparison module (53) configured to select transformed $w_{ebb}$ as the antenna array weight vector if $p_{gob}$ derived by the $p_{gob}$ derivation module (52) is below $p_{ebb}$ derived by the $p_{ebb}$ derivation module (51), otherwise, select $w_{gob}$ as the antenna array weight vector.

**Patentansprüche**

1. Strahlbildungsverfahren, das auf ein Multiarray-Antennensystem angewendet werden kann und das Folgendes umfasst:

- Herleiten (21) einer Schätzung der Kanalimpulsantwort $\mathbf{h}_{ka}^n$ , wie sie durch jedes Antennenelement in dem Multiarray-Antennensystem wahrgenommen wird, wobei $ka = 1...K_a^n$, $n$=1...$N$ die Gesamtzahl von Arrays darstellt und mehr als eins ist, und $K_a^n$ die Gesamtzahl von Antennenelementen in dem n-ten Array darstellt, wobei die $\mathbf{h}_{ka}^n$ zu N Kanalmatrizes $\mathbf{H}_n$ angeordnet werden, wobei $\mathbf{H}_n = [\mathbf{h}_1^T, \mathbf{h}_2^T, ... \mathbf{h}_{K_a^n}^T]^T$ , und wobei eine gemeinsame Kanalmatrix H als $\mathbf{H} = [\mathbf{H}_1^T, \mathbf{H}_2^T, ... \mathbf{H}_N^T]^T$ definiert ist, wobei $(\cdot)^T$ eine Transponierung eines Vektors oder einer Matrix darstellt;

- Herleiten (22) einer räumlichen Querkorrelationsmatrix $\mathbf{R}_n$ eines Kanals, der jedem Array von Antennen entspricht, aus $\mathbf{h}_{ka}^n$ , wobei $\mathbf{R}_n = \mathbf{H}_n \mathbf{H}_n^{\mathbf{H}}, n = 1...N$ , wobei $(\cdot)^H$ eine konjugierte Transponierung eines Vektors oder einer Matrix darstellt,

- Herleiten (22) von Antennen-Array-Gewichtsvektoren $\mathbf{w}_{gob}^n$ , $n = 1...N$ jedes Arrays von Antennen aus $\mathbf{R}_n$

in einem GOB-Algorithmus, wobei der GOB-Algorithmus mit folgenden Schritten implementiert wird:

• Definieren eines vorgegebenen Satzes von Array-Antwort-Vektoren $\mathbf{a}^n(\varphi_l)$, die bestimmte Abtastwinkel $\varphi_l$, $l = 1 \ldots L$ abdecken, wobei $L$ die Gesamtzahl von Abtastwinkeln darstellt,

• Berechnen der Leistung $p_l^n$ des empfangenen Signals für jeden Array-Antwort-Vektor $\mathbf{a}^n(\varphi_l)$, wobei

$$p_l^n = \mathbf{a}^n(\varphi_l)^{\mathbf{H}} \mathbf{R}_n \mathbf{a}^n(\varphi_l), \; n = 1 \ldots N,,$$

• und Auswählen, als Antennen-Array-Gewichtsvektor $\mathbf{w}_{gob}^n$, des Array-Antwort-Vektors $\mathbf{a}^n(\varphi_{max})$, wobei

$\varphi_{max}$ das $\varphi_l$ ist, das, für konstantes $n$ die Leistung $p_l^n$ maximiert, wodurch die maximale Leistung für die Strahlbildung erhalten wird;

- Herleiten (12) einer räumlichen Querkorrelationsmatrix $\mathbf{R}$ eines gemeinsamen Kanals aller Arrays von Antennen aus $\mathbf{h}_{ka}^n$ als $\mathbf{R} = \mathbf{H}\mathbf{H}^{\mathbf{H}}$;

- Herleiten (12) eines Eigenvektors $\mathbf{w}_{ebb}$, der dem maximalen Eigenwert von $\mathbf{R}$ entspricht, wobei

$$\mathbf{w}_{ebb} = [\mathbf{w}_1^{\mathbf{T}}, \mathbf{w}_2^{\mathbf{T}}, \ldots \mathbf{w}_N^{\mathbf{T}}]^{\mathbf{T}},$$ wobei jedes der $N$ Subarrays $\mathbf{w}_n$ von $\mathbf{w}_{ebb}$ der Array-Gewichtsvektor des n-ten Arrays von Antennen ist;

- Herleiten (23) einer Phasendifferenz $\Delta\varphi^n$ zwischen jeweils zwei Arrays von Antennen aus $\mathbf{w}_{gob}^n$ und $\mathbf{w}_n$ als

$$\Delta\varphi^n = \arg(\mathbf{w}_{gob}^{n\mathbf{H}} \mathbf{w}_n^{\mathbf{T}}), n = 1 \ldots N \; ;$$

- Herleiten (24) eines Gesamt-GOB-Antennen-A-rray-Gewichtsvektors $\mathbf{w}_{gob}$ aller Arrays von Antennen aus

$\mathbf{w}_{gob}^n$ und $\Delta\varphi^n$ als $\mathbf{W}_{gob} = [\mathbf{w}_{gob}^1 e^{j \cdot 2\pi \cdot \Delta\varphi^1}, \mathbf{w}_{gob}^2 e^{j \cdot 2\pi \cdot \Delta\varphi^2}, \ldots \mathbf{w}_{gob}^N e^{j \cdot 2\pi \cdot \Delta\varphi^N}]$ ; und

- Ausführen (25) einer strahlbildungsbasierten Übertragung unter Verwendung von $\mathbf{w}_{gob}$.

2. Verfahren nach Anspruch 1, das des Weiteren Folgendes umfasst:

- Transformieren (13) von $\mathbf{w}_{ebb}$ je Array oder je Antenne durch Ändern lediglich seiner Amplitude;

- Herleiten von $p_{ebb}$ aus dem transformierten $\mathbf{w}_{ebb}$ und R als $p_{ebb} = \left| \mathbf{w}_{ebb}^{\mathbf{H}} \mathbf{R} \mathbf{w}_{ebb} \right|$, wobei $p_{ebb}$ die Leistung eines Signals darstellt, das in einem Endgerät empfangen wird und unter Verwendung eines Antennen-Array-Gewichtsvektors des transformierten $\mathbf{w}_{ebb}$ gebildet wird; und

- Herleiten von $p_{gob}$ aus $\mathbf{R}$ und $\mathbf{w}_{gob}^n$ als $p_{gob} = \left| \mathbf{w}_{gob}^{\mathbf{H}} \mathbf{R} \mathbf{w}_{gob} \right|$, wobei $p_{gob}$ die Leistung eines Signals darstellt, das in dem Endgerät empfangen wird und unter Verwendung von $\mathbf{w}_{gob}$ gebildet wird; und

- falls $p_{gob} < p_{ebb}$, Auswählen des transformierten $\mathbf{w}_{ebb}$ als den Antennen-Array-Gewichtsvektor; anderenfalls Auswählen von $\mathbf{w}_{gob}$ als den Antennen-Array-Gewichtsvektor.

3. Verfahren nach Anspruch 2, wobei das Transformieren von $\mathbf{w}_{ebb}$ je Array durch Ändern lediglich seiner Amplitude Folgendes umfasst:

- Herleiten von Antennen-Array-Gewichtsvektoren $\mathbf{w}_n$ der Arrays von Antennen aus $\mathbf{w}_{ebb}$, und
- Transformieren von $\mathbf{w}_n$ in Amplitude in die Antennen-Array-Gewichtsvektoren $\hat{\mathbf{w}}_n$ als

$$\hat{\mathbf{w}}_n = \alpha_n \mathbf{w}_n, n = 1 \ldots N, \; \text{wobei} \; \alpha_n = \sqrt{\frac{\mathbf{w}_n^{\mathbf{H}} \mathbf{w}_n}{\sum_{n=1}^{N} \mathbf{w}_n^{\mathbf{H}} \mathbf{w}_n}}, n = 1 \ldots N.$$

4. Verfahren nach Anspruch 2, wobei das Transformieren von $\mathbf{w}_{ebb}$ je Antenne durch Ändern lediglich seiner Amplitude Folgendes umfasst:
- Herleiten eines Antennen-Array-Gewichtsvektors $w_n^{(k_a)}$ jedes Antennenelements aus $\mathbf{w}_{ebb}$, wobei

$k_a = 1 \ldots K_a^n, n = 1 \ldots N$, und $K_a^n$ die Gesamtzahl von Antennenelementen in dem n-ten Array darstellt, und Transformieren von $w_n^{(k_a)}$ in Amplitude in den Antennen-Array-Gewichtsvektor $\hat{\mathbf{w}}_n^{(k_a)}$ als

$$\hat{\mathbf{w}}_n^{(k_a)} = \beta_n^{(k_a)} w_n^{(k_a)}, k_a = 1...K_a^n, n = 1...N \text{ , wobei } \beta_n^{(k_a)} = \sqrt{\frac{\left|w_n^{(k_a)}\right|^2}{\sum_{n=1}^{N} \mathbf{w}_n^{\mathbf{H}} \mathbf{w}_n}}, k_a = 1...K_a^n, n = 1...N \quad .$$

5. Verfahren nach Anspruch 2, wobei, wenn die Leistung, die einem Antennenelement gemäß dem Antennen-Array-Gewichtsvektor des transformierten **w**_{ebb} zugewiesen wird, die maximale Sendeleistung des Antennenelements überschreitet, das Antennenelement mit seiner maximalen Sendeleistung sendet, und die zugewiesene Leistung minus der maximalen Sendeleistung des Antennenelements einem Antennenelement eines anderes Arrays neu zugewiesen wird, während sichergestellt wird, dass die Sendeleistung jedes Antennenelements nicht seine maximale Sendeleistung überschreitet.

6. Verfahren nach Anspruch 5, wobei die Neuzuweisung nach einem Prinzip des maximalen oder gleichen Verhältnisses ausgeführt wird.

7. Strahlbildungsvorrichtung, die in einem Multiarray-Antennensystem angewendet werden kann und die Folgendes umfasst:

- ein $\mathbf{h}_{ka}^n$ –-Herleitungsmodul (31), das dafür ausgebildet ist, eine Schätzung der Kanalimpulsantwort $\mathbf{h}_{ka}^n$ , wie sie durch jedes Antennenelement in dem Multiarray-Antennensystem wahrgenommen wird, herzuleiten, wobei $ka = 1...K_a^n$ , $n = 1...N$ und N die Gesamtzahl von Arrays darstellt und mehr als eins ist, und $K_a^n$ die Gesamtzahl von Antennenelementen in dem n-ten Array darstellt;

- ein **R**_{n}-Herleitungsmodul (42), das dafür ausgebildet ist, aus dem durch das $\mathbf{h}_{ka}^n$ – Herleitungsmodul (31) ausgegebenen $\mathbf{h}_{ka}^n$ N Kanalmatrizes $\mathbf{H}_n = [\mathbf{h}_1^{\mathbf{T}}, \mathbf{h}_2^{\mathbf{T}}, ...\mathbf{h}_{K_a^n}^{\mathbf{T}}]^{\mathbf{T}}, n = 1...N$ herzuleiten und eine räumliche Querkorrelationsmatrix **R**_{n} eines Kanals, der jedem Array von Antennen entspricht, als $\mathbf{R}_n = \mathbf{H}_n \mathbf{H}_n^{\mathbf{H}}$ herzuleiten, wobei $(\cdot)^T$ eine Transponierung darstellt und $(\cdot)^H$ eine konjugierte Transponierung eines Vektors oder einer Matrix darstellt;

- ein $\mathbf{w}_{gob}^n$ –]-Herleitungsmodul (43), das dafür ausgebildet ist, einen GOB-Algorithmus implementieren, wobei der GOB-Algorithmus dafür ausgebildet ist, einen vorgegebenen Satz von Array-Antwort-Vektoren $\mathbf{a}^n(\varphi_l)$ zu definieren, die bestimmte Abtastwinkel $\varphi_l, l = 1 ...L$ abdecken, wobei L die Gesamtzahl von Abtastwinkeln darstellt; die Leistung $p_l^n$ des empfangenen Signals für jeden Array-Antwort-Vektor $\mathbf{a}^n(\varphi_l)$ zu berechnen, wobei $p_l^n = \mathbf{a}^n(\varphi_l)^{\mathbf{H}} \mathbf{R}_n \mathbf{a}^n(\varphi_l), n = 1...N, l = 1...L,$ wobei **R**_{n} jenes ist, das durch das **R**_{n}-Herleitungsmodul (42) hergeleitet wurde; und als Antennen-Array-Gewichtsvektor $\mathbf{w}_{gob}^n$ den Array-Antwort-Vektor $\mathbf{a}^n(\varphi_{max})$ auszuwählen, wobei $\varphi_{max}$ das $\varphi_l$ ist, das für ein konstantes n die Leistung $p_l^n$ maximiert, wodurch die maximale Leistung für die Strahlbildung erhalten wird;

- ein **R**-Herleitungsmodul (32), das dafür ausgebildet ist, aus dem durch das $\mathbf{h}_{ka}^n$ – Herleitungsmodul (31) ausgegebenen $\mathbf{h}_{ka}^n$ eine gemeinsame Kanalmatrix **H** als $\mathbf{H} = [\mathbf{H}_1^{\mathbf{T}}, \mathbf{H}_2^{\mathbf{T}}, ...\mathbf{H}_N^{\mathbf{T}}]^{\mathbf{T}}$ herzuleiten, wobei $\mathbf{H}_n = [\mathbf{h}_1^{\mathbf{T}}, \mathbf{h}_2^{\mathbf{T}}, ...\mathbf{h}_{K_a^n}^{\mathbf{T}}]^{\mathbf{T}},$ und eine räumliche Querkorrelationsmatrix **R** eines gemeinsamen Kanals aller Arrays von Antennen als $\mathbf{R}_n = \mathbf{H}_n \mathbf{H}_n^{\mathbf{H}}$ zu erhalten,

- ein **w**_{ebb}-Herleitungsmodul (33), das dafür ausgebildet ist, einen Eigenvektor **w**_{ebb}, der dem durch das **R**-Herleitungsmodul (32) hergeleiteten maximalen Eigenwert von **R** entspricht, herzuleiten, wobei $\mathbf{w}_{ebb} = [\mathbf{w}_1^{\mathbf{T}}, \mathbf{w}_2^{\mathbf{T}}, ...\mathbf{w}_N^{\mathbf{T}}]^{\mathbf{T}}$ , wobei jedes der N Subarrays **w**_{n} von **w**_{ebb} der Array-Gewichtsvektor des n-ten Arrays von Antennen ist;

- ein $\Delta\varphi^n$-Herleitungsmodul (44), das dafür ausgebildet ist, eine Phasendifferenz $\Delta\varphi^n$ zwischen jeweils zwei Arrays von Antennen aus dem durch das $\mathbf{w}_{gob}^n$ −]Herleitungsmodul (43) hergeleiteten $\mathbf{w}_{gob}^n$ und dem durch das $\mathbf{w}_{ebb}$-Herleitungsmodul (33) hergeleiteten $\mathbf{w}_n$ herzuleiten, wobei $\Delta\varphi^n = \arg(\mathbf{w}_{gob}^{n\mathrm{H}}\mathbf{w}_{\mathrm{n}}^{\mathrm{T}}), n=1...N$ ;

- ein $\mathbf{w}_{gob}$-Herleitungsmodul (45), das dafür ausgebildet ist, einen Gesamt-GOB-Antennen-Array-Gewichtsvektor $\mathbf{w}_{gob}$ aller Arrays von Antennen aus dem durch das $\mathbf{w}_{gob}^n$ −] Herleitungsmodul (43) hergeleiteten $\mathbf{w}_{gob}^n$ und dem durch das $\Delta\varphi^n$-Herleitungsmodul (44) hergeleiteten $\Delta\varphi^n$ als $\mathbf{w}_{gob} = [\mathbf{w}_{gob}^1 e^{j\cdot 2\pi\cdot\Delta\varphi^1}, \mathbf{w}_{gob}^2 e^{j\cdot 2\pi\cdot\Delta\varphi^2}, ...\mathbf{w}_{gob}^N e^{j\cdot 2\pi\cdot\Delta\varphi^N}]$ herzuleiten; und

- ein $\mathbf{w}_{gob}$-strahlbildungsbasiertes Übertragungsmodul (46), das dafür ausgebildet ist, eine strahlbildungsbasierte Übertragung unter Verwendung des durch das $\mathbf{w}_{gob}$-Herleitungsmodul (45) transformierten $\mathbf{w}_{gob}$ auszuführen.

**8.** Vorrichtung nach Anspruch 7, das des Weiteren ein Transformationsmodul (34) umfasst, das dafür ausgebildet ist, $\mathbf{w}_{ebb}$ je Array (341) oder je Antenne (342) durch Ändern lediglich seiner Amplitude zu transformieren, wobei die Vorrichtung des Weiteren Folgendes umfasst:

- ein $p_{ebb}$-Herleitungsmodul (51), das dafür ausgebildet ist, $p_{ebb}$ aus dem durch das Transformationsmodul (34) hergeleiteten transformierten $\mathbf{w}_{ebb}$ und $\mathbf{R}$ als $p_{ebb} = \left|\mathbf{w}_{ebb}^{\mathrm{H}}\mathbf{R}\mathbf{w}_{ebb}\right|$ herzuleiten, wobei $p_{ebb}$ die Leistung eines Signals darstellt, das in einem Endgerät empfangen wird und unter Verwendung eines Antennen-Array-Gewichtsvektors des transformierten $\mathbf{w}_{ebb}$ gebildet wird;

- ein $p_{gob}$-Herleitungsmodul (52), das dafür ausgebildet ist, $p_{gob}$ aus $\mathbf{R}$ und $\mathbf{w}_{gob}^n$ als $p_{gob} = \left|\mathbf{w}_{gob}^{\mathrm{H}}\mathbf{R}\mathbf{w}_{gob}\right|$ herzuleiten, wobei $p_{gob}$ die Leistung eines Signals darstellt, das in dem Endgerät empfangen wird und unter Verwendung von $\mathbf{w}_{gob}$ gebildet wird; und

- ein Vergleichsmodul (53), das dafür ausgebildet ist, das transformierte $w_{ebb}$ als den Antennen-Array-Gewichtsvektor auszuwählen, falls das durch das $p_{gob}$-Herleitungsmodul (52) hergeleitete $p_{gob}$ unter dem durch das $p_{ebb}$-Herleitungsmodul (51) hergeleiteten $p_{ebb}$ liegt, anderenfalls Auswählen von $w_{gob}$ als den Antennen-Array-Gewichtsvektor.

## Revendications

**1.** Procédé de formation de faisceau applicable à un système d'antennes multiréseau, comprenant :

- dériver (21) une estimation de la réponse impulsionnelle de canal $\mathbf{h}_{ka}^n$ qui est perçue par chaque élément d'antenne du système d'antennes multiréseau, dans lequel $ka = 1...K_a^n, n = 1...N$ représente le nombre total de réseaux et est supérieur à un, et $K_a^n$ représente le nombre total d'éléments d'antenne dans le nième réseau, dans lequel les $\mathbf{h}_{ka}^n$ sont agencés en N matrices de canal $\mathbf{H}_n$, où $\mathbf{H}_n = [\mathbf{h}_1^{\mathrm{T}}, \mathbf{h}_2^{\mathrm{T}}, ...\mathbf{h}_{K_a^n}^{\mathrm{T}}]^{\mathrm{T}}$ , et dans lequel une matrice de canal commun H est définie sous la forme $\mathbf{H} = [\mathbf{H}_1^{\mathrm{T}}, \mathbf{H}_2^{\mathrm{T}}, ...\mathbf{H}_N^{\mathrm{T}}]^{\mathrm{T}}$ , où $(\cdot)^T$ représente la transposition d'un vecteur ou d'une matrice ;

- dériver (22) une matrice de corrélation croisée spatiale $\mathbf{R}_n$ d'un canal correspondant à chaque réseau d'antennes à partir de $\mathbf{h}_{ka}^n$ , où $\mathbf{R}_n = \mathbf{H}_n\mathbf{H}_n^{\mathrm{H}}, n = 1...N$ et où $(\cdot)^H$ représente la transposition conjuguée d'un vecteur ou d'une matrice ;

- dériver (22) des vecteurs de poids de réseau d'antennes $\mathbf{w}_{gob}^n$ , n=1...N de chaque réseau d'antennes à partir de $\mathbf{R}_n$ dans un algorithme GOB, ledit algorithme GOB étant mis en oeuvre par des étapes consistant à :

• définir un ensemble prédéfini de vecteurs de réponse de réseau $\mathbf{a}^n(\varphi_l)$ qui couvrent certains angles de balayage $\varphi_l$, $l = 1 ...L$, , $L$ représentant le nombre total d'angles de balayage,

• calculer la puissance $p_l^n$ du signal reçu pour chaque vecteur de réponse de réseau $\mathbf{a}^n(\varphi_l)$, où =

$$p_l^n = \mathbf{a}^n(\varphi_l)^{\mathbf{H}}\mathbf{R}_n\mathbf{a}^n(\varphi_l), n = 1...N \text{ et}$$

• choisir comme vecteur de poids de réseau d'antennes $w^n_{gob}$ le vecteur de réponse de réseau $\mathbf{a}^n(\varphi_{max})$, où $\varphi_{max}$ est le $\varphi_l$ qui maximise, pour n constant, la puissance $p_l^n$, fournissant la puissance maximale pour la formation de faisceau ;

- dériver (12) une matrice de corrélation croisée spatiale **R** d'un canal commun de l'ensemble des réseaux d'antennes à partir de $\mathbf{h}_{ka}^n$ sous la forme **R = HH$^{\mathbf{H}}$** ;

- dériver (12) un vecteur propre $\mathbf{w}_{ebb}$ correspondant à la valeur propre maximale de R où $\mathbf{w}_{ebb} = [\mathbf{w}_1^{\mathbf{T}}, \mathbf{w}_2^{\mathbf{T}}, ...\mathbf{w}_{\mathbf{N}}^{\mathbf{T}}]^{\mathbf{T}}$ , chacun des $N$ sous-réseaux $\mathbf{w}_n$ de $\mathbf{w}_{ebb}$ étant le vecteur de poids de réseau du nième réseau d'antennes ;

- dériver (23) une différence de phase $\Delta\varphi^n$ entre chaque paire de réseaux d'antennes à partir de $\mathbf{w}_{gob}^n$ et de $\mathbf{w}_n$ sous la forme $\Delta\varphi^n = \arg(\mathbf{w}_{gob}^{n\mathbf{H}}\mathbf{w}_{\mathrm{n}}^{\mathbf{T}}), n = 1...N$

- dériver (24) un vecteur de poids de réseau d'antennes GOB total $\mathbf{w_{gob}}$ de l'ensemble des réseaux d'antennes à partir de $\mathbf{w}_{gob}^n$ et de $\Delta\varphi^n$ sous la forme $\mathbf{w}_{gob} = [\mathbf{w}_{gob}^1 e^{j\cdot 2\pi\cdot\Delta\varphi^1}, \mathbf{w}_{gob}^2 e^{j\cdot 2\pi\cdot\Delta\varphi^2}, ...\mathbf{w}_{gob}^N e^{j\cdot 2\pi\cdot\Delta\varphi^N}]$ ; et

- effectuer (25) une transmission basée sur la formation de faisceau en utilisant $\mathbf{w_{gob}}$.

2. Procédé selon la revendication 1, comprenant en outre :

- transformer (13) $\mathbf{w_{ebb}}$ par réseau ou par antenne en modifiant uniquement son amplitude ;

- dériver $p_{ebb}$ à partir du $\mathbf{w}_{ebb}$ transformé et de **R** sous la forme $p_{ebb} = \left|\mathbf{w}_{ebb}^{\mathbf{H}}\mathbf{R}\mathbf{w}_{ebb}\right|$ où $p_{ebb}$ représente la puissance d'un signal reçu au niveau d'un terminal et formé en utilisant un vecteur de poids de réseau d'antennes de $\mathbf{w}_{ebb}$ transformé ;

- dériver $p_{gob}$ à partir de **R** et de $\mathbf{w}_{gob}^n$ sous la forme $p_{gob} = \left|\mathbf{w}_{gob}^{\mathbf{H}}\mathbf{R}\mathbf{w}_{gob}\right|$ , où $p_{gob}$ représente la puissance d'un signal reçu au niveau du terminal et formé en utilisant $\mathbf{w_{gob}}$ ; et

- si $p_{gob} < p_{ebb}$, sélectionner $\mathbf{w_{ebb}}$ transformé en tant que vecteur de poids de réseau d'antennes ; sinon, sélectionner $\mathbf{w_{gob}}$ en tant que vecteur de poids de réseau d'antennes.

3. Procédé selon la revendication 2, dans lequel la transformation de $\mathbf{w_{ebb}}$ par réseau en modifiant uniquement son amplitude comprend :

- dériver des vecteurs de poids de réseau d'antennes $w_n$ des réseaux d'antennes à partir de $\mathbf{w_{ebb}}$, et
- transformer $w_n$ en amplitude dans les vecteurs de poids de réseau d'antennes $\hat{\mathbf{w}}_n$ sous la forme $\hat{\mathbf{w}}_n = \alpha_n\mathbf{w}_n$,

$$n = 1...N, \text{ où } \alpha_n = \sqrt{\frac{\mathbf{w}_n^{\mathbf{H}}\mathbf{w}_n}{\sum_{n=1}^{N}\mathbf{w}_n^{\mathbf{H}}\mathbf{w}_n}}, n = 1...N .$$

4. Procédé selon la revendication 2, dans lequel la transformation de $\mathbf{w_{ebb}}$ par antenne en modifiant uniquement son amplitude comprend :

- dériver un vecteur de poids de réseau d'antennes $w_n^{(k_a)}$ de chaque élément d'antenne à partir de $\mathbf{w_{ebb}}$, où $k_a = 1...K_a^n, n = 1...N$ , et $K_a^n$ représente le nombre total d'éléments d'antenne dans le nième réseau, et transformer $w_n^{(k_a)}$ en amplitude dans le vecteur de poids de réseau d'antennes $\hat{\mathbf{w}}_n^{(k_a)}$ sous la forme

$$\hat{\mathbf{w}}_n^{(k_a)} = \beta_n^{(k_a)} w_n^{(k_a)}, k_a = 1...K_a^n, \ n = 1...N, \text{ où } \beta_n^{(k_a)} = \sqrt{\frac{\left| w_n^{(k_a)} \right|^2}{\sum\limits_{n=1}^{N} \mathbf{w}_n^{\mathbf{H}} \mathbf{w}_n}}, k_a = 1...K_a^n, n = 1...N \ .$$

5. Procédé selon la revendication 2, dans lequel, lorsque la puissance allouée à un élément d'antenne en fonction du vecteur de poids de réseau d'antennes de $\mathbf{w}_{ebb}$ transformé est supérieure à la puissance d'émission maximale de l'élément d'antenne, l'élément d'antenne émet à sa puissance d'émission maximale et la puissance allouée moins la puissance d'émission maximale de l'élément d'antenne est réaffectée à un élément d'antenne d'un autre réseau, tout en assurant que la puissance d'émission de chaque élément d'antenne ne dépasse pas la puissance d'émission maximale de celui-ci.

6. Procédé selon la revendication 5, dans lequel la réaffectation est effectuée selon un principe de rapport maximum ou égal.

7. Dispositif de formation de faisceau applicable à un système d'antennes multiréseau, comprenant :

- un module de dérivation $\mathbf{h}_{ka}^n$ (31) configuré pour dériver une estimation de la réponse impulsionnelle de canal $\mathbf{h}_{ka}^n$ qui est perçue par chaque élément d'antenne du système d'antennes multiréseau, dans lequel $ka = 1...K_a^n$, $n = 1...N$, et N représente le nombre total de réseaux et est supérieur à un, et $K_a^n$ représente le nombre total d'éléments d'antenne dans le nième réseau ;

- un module de dérivation $\mathbf{R}_n$ (42) configuré pour dériver à partir de $\mathbf{h}_{ka}^n$ délivré par le module de dérivation $\mathbf{h}_{ka}^n$ (31) N matrices de canal $\mathbf{H}_n = [\mathbf{h}_1^{\mathbf{T}}, \mathbf{h}_2^{\mathbf{T}}, ...\mathbf{h}_{K_a^n}^{\mathbf{T}}]^{\mathbf{T}}$, $n = 1...N$, et pour dériver une matrice de corrélation croisée spatiale $\mathbf{R}_n$ d'un canal correspondant à chaque réseau d'antennes sous la forme $\mathbf{R}_n = \mathbf{H}_n \mathbf{H}_n^{\mathbf{H}}$, où $(\cdot)^T$ représente la transposition et $(\cdot)^H$ représente la transposition conjuguée d'un vecteur ou d'une matrice ;

- un module de dérivation $\mathbf{w}_{gob}^n$ (43) configuré pour mettre en oeuvre un algorithme GOB, dans lequel ledit algorithme GOB est configuré pour définir un ensemble prédéfini de vecteurs de réponse de réseau $\mathbf{a}^n(\varphi_l)$, qui couvrent certains angles de balayage $\varphi_l, l=1...L$, $L$ représentant le nombre total d'angles de balayage, pour calculer la puissance $p_l^n$ du signal reçu pour chaque vecteur de réponse de réseau $\mathbf{a}^n(\varphi_l)$, où $p_l^n = \mathbf{a}^n(\varphi_l)^{\mathbf{H}} \mathbf{R}_n \mathbf{a}^n(\varphi_l), n = 1...N, l = 1...L,$ $\mathbf{R}_n$ $n = 1...N$, $l = 1...L$, $\mathbf{R}_n$ étant celle dérivée par le module de dérivation $\mathbf{R}_n$ (42), et pour choisir en tant que vecteur de réseau d'antennes $\mathbf{w}_{gob}^n$ le vecteur de réponse de réseau $\mathbf{a}^n(\varphi_{max})$ où $\varphi_{max}$ est le $\varphi_l$ qui maximise, pour n constante, la puissance $p_l^n$ fournissant la puissance maximale pour la formation de faisceau ;

- un module de dérivation $\mathbf{R}$ (32) configuré pour dériver à partir de $\mathbf{h}_{ka}^n$ délivré par le module de dérivation $\mathbf{h}_{ka}^n$ (31) une matrice de canal commun $\mathbf{H}$ sous la forme $\mathbf{H} = [\mathbf{H}_1^{\mathbf{T}}, \mathbf{H}_2^{\mathbf{T}}, ...\mathbf{H}_N^{\mathbf{T}}]^{\mathbf{T}}$, où $\mathbf{H}_n = [\mathbf{h}_1^{\mathbf{T}}, \mathbf{h}_2^{\mathbf{T}}, ...\mathbf{h}_{K_a^n}^{\mathbf{T}}]^{\mathbf{T}}$, et pour obtenir une matrice de corrélation croisée spatiale $\mathbf{R}$ d'un canal commun de l'ensemble des réseaux d'antennes sous la forme $\mathbf{R}_n = \mathbf{H}_n \mathbf{H}_n^{\mathbf{H}}$ ;

- un module de dérivation $\mathbf{w}_{ebb}$ (33) configuré pour dériver un vecteur propre $\mathbf{w}_{ebb}$ correspondant à la valeur propre maximale de R, dérivé par le module de dérivation R (32), où $\mathbf{w}_{ebb} = [\mathbf{w}_1^{\mathbf{T}}, \mathbf{w}_2^{\mathbf{T}}, ...\mathbf{w}_N^{\mathbf{T}}]^{\mathbf{T}}$, chacun des $N$ sous-réseaux $\mathbf{w}_n$ de $\mathbf{w}_{ebb}$ étant le vecteur de poids de réseau du nième réseau d'antennes ;

- un module de dérivation $\Delta\varphi^n$ (44) configuré pour dériver une différence de phase $\Delta\varphi^n$ entre chaque paire de réseaux d'antennes à partir de $\mathbf{w}_{gob}^n$ dérivé par le module de dérivation $\mathbf{w}_{gob}^n$ (43) et $\mathbf{w}_n$ dérivé par le module de dérivation $\mathbf{w}_{ebb}$ (33), où $\Delta\varphi^n = \arg(\mathbf{w}_{gob}^{n\mathbf{H}} \mathbf{w}_n^{\mathbf{T}}), n = 1...N$ ; ;

- un module de dérivation $\mathbf{w}_{gob}$ (45) configuré pour dériver un vecteur de poids de réseau d'antennes GOB

total $\mathbf{w}_{gob}$ de l'ensemble des réseaux d'antennes à partir de $\mathbf{W}_{gob}^n$ dérivé par le module de dérivation $\mathbf{W}_{gob}^n$ (43) et de $\Delta\varphi^n$ dérivé par le module de dérivation $\varphi\Delta^n$ (44) sous la forme

$$\mathbf{w}_{gob} = [\mathbf{w}_{gob}^1 e^{j\cdot 2\pi\cdot\Delta\varphi^1}, \mathbf{w}_{gob}^2 e^{j\cdot 2\pi\cdot\Delta\varphi^2}, \dots \mathbf{w}_{gob}^N e^{j\cdot 2\pi\cdot\Delta\varphi^N}] \quad ; \quad \text{et}$$

- un module de transmission basée sur la formation de faisceau $\mathbf{w}_{gob}$ (46) configuré pour effectuer une transmission basée la formation de faisceau en utilisant $\mathbf{w}_{gob}$ transformé par le module de dérivation $\mathbf{w}_{gob}$ (45).

8. Dispositif selon la revendication 7, comprenant en outre un module de transformation (34) configuré pour transformer $\mathbf{w}_{ebb}$ par réseau (341) ou par antenne 2 (342) en modifiant uniquement son amplitude, et le dispositif comprenant en outre :

- un module de dérivation $p_{ebb}$ (51) configuré pour dériver $p_{ebb}$ à partir du $\mathbf{w}_{ebb}$ transformé dérivé par le module de transformation (34) et de $\mathbf{R}$ sous la forme $p_{ebb} = \left| \mathbf{w}_{ebb}^{\mathbf{H}} \mathbf{R} \mathbf{w}_{ebb} \right|$, où $p_{ebb}$ représente la puissance d'un signal reçu au niveau d'un terminal et formé en utilisant un vecteur de poids de réseau d'antennes de $\mathbf{w}_{ebb}$ transformé ;

- un module de dérivation $p_{gob}$ (52) configuré pour dériver $p_{gob}$ à partir de $\mathbf{R}$ et de $\mathbf{W}_{gob}^n$ sous la forme $p_{gob} = \left| \mathbf{w}_{gob}^{\mathbf{H}} \mathbf{R} \mathbf{w}_{gob} \right|$, où $p_{gob}$ représente la puissance d'un signal reçu au niveau du terminal et formé en utilisant $\mathbf{w}_{gob}$ ; et

- un module de comparaison (53) configuré pour sélectionner $\mathbf{w}_{ebb}$ transformé en tant que vecteur de poids de réseau d'antennes si $p_{gob}$ dérivé par le module de dérivation $p_{gob}$ (52) est inférieur à $p_{ebb}$ dérivé par le module de dérivation $p_{ebb}$ (51), sinon, sélectionner $w_{gob}$ en tant que vecteur de poids de réseau d'antennes.

FIG.1

FIG.2

```
┌─────────────────────────────────────────────┐  ⌐ 11
│  Calculate a channel estimation result       │
│  corresponding to each antenna element       │
└─────────────────────────────────────────────┘
                      │
                      ▼
┌─────────────────────────────────────────────┐  ⌐ 12
│  Derive a spatial cross correlation matrix   │
│  of a joint channel of each array of         │
│  antennas and an eigenvector corresponding   │
│  to the maximum eigenvalue of the matrix     │
└─────────────────────────────────────────────┘
                      │
                      ▼
┌─────────────────────────────────────────────┐  ⌐ 13
│  Transform the eigenvector (i.e., a shaping  │
│  vector) corresponding to the maximum        │
│  eigenvalue                                  │
└─────────────────────────────────────────────┘
                      │
                      ▼
┌─────────────────────────────────────────────┐  ⌐ 14
│  Perform beam forming based transmission     │
│  using the transformed forming vector        │
└─────────────────────────────────────────────┘
```

Fig.3

$s(t)$ ⟶ $\times$ $w^{(1)}$

$\times$ $w^{(2)}$

$\vdots$

$\times$ $w^{(N_1+N_2)}$

Fig.4

Fig.5

$h_{ka}^n$ derivation module — 31

R derivation module — 32

$\mathbf{W}_{ebb}$ derivation module — 33

Transformation module — 34

Array transformation module — 341

Antenna transformation module — 342

Transformed beam forming based transmission module — 35

Allocation module — 36

Fig.6

31

$h_{ka}^{n}$ derivation module

42

$\mathbf{R}_{n}$ derivation module

43

$\mathbf{w}_{gob}^{n}$ derivation module

44

$\Delta\varphi^{n}$ derivation module

45

$\mathbf{w}_{gob}$ derivation module

46

$\mathbf{w}_{gob}$ Beam forming based transmission module

Fig.7

51

$p_{ebb}$ derivation module

52

$p_{gob}$ derivation module

53

Comparison module

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050128983 A1

- US 20060234751 A1